Europäisches Patentamt

European Patent Office

Office européen des brevets

(11) Veröffentlichungsnummer: **0 341 525**
**A2**

## (12) EUROPÄISCHE PATENTANMELDUNG

(21) Anmeldenummer: 89107841.2

(22) Anmeldetag: 29.04.89

(51) Int. Cl.4: **G11B 15/093** , **G11B 23/30** , **G11B 23/04** , **G11B 15/54**

(30) Priorität: 13.05.88 DE 3816346

(43) Veröffentlichungstag der Anmeldung:
**15.11.89 Patentblatt 89/46**

(84) Benannte Vertragsstaaten:
**AT CH DE FR GB IT LI SE**

(71) Anmelder: **Blaupunkt-Werke GmbH**
**Robert-Bosch-Strasse 200**
**D-3200 Hildesheim(DE)**

(72) Erfinder: **Schochow, Karl-Peter**
**Kesslerstrasse 31**
**D-3200 Hildesheim(DE)**
Erfinder: **Hapke, Walter**
**Orleansstrasse 75e**
**D-3200 Hildesheim(DE)**
Erfinder: **Friedrich, Siegfried**
**Am Kuckucksberg 20**
**D-3207 Harsum(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Anordnung zur optoelektronischen Überwachung des Bandtransportes in einem Kassettentonbandgerät.**

(57) Der die Aufwickelfunktion ausführende Wickelteller eines Kassettentonbandgerätes ist mit Hell-Dunkel-Sektoren steigender oder fallender Breite versehen, die in Verbindung mit einer Lichtschranke elektrische Impulse zur Überwachung des Bandtransportes erzeugen. Ein Mikroprozessor erkennt aus diesen Impulsen die Drehrichtung des Wickeltellers und schaltet das Gerät ab, wenn der Aufwickelteller infolge einer durch Aufwickeln des Bandes auf der Capstanwelle hervorgerufenen Störung seine vorgegebene Drehrichtung umkehrt.

# Anordnung zur optoelektronischen Überwachung des Bandtransportes in einem Kassettentonbandgerät

Die Erfindung betrifft eine Anordnung zur optoelektronischen Überwachung des Bandtransportes in einem Kassettentonbandgerät nach dem Oberbegriff des Patentanspruchs 1.

Bei Kassettentonbandgeräten ist es üblich, den jeweils die Aufwickelfunktion übernehmenden Wickelteller mit einem Impulsgeber zu koppeln, der bei Funktionsstörungen, wie sie beispielsweise durch klemmende oder schwergängige Kassetten sowie durch defekte Antriebsmittel hervorgerufen werden können, ein Abschalten des Gerätes und/oder ein Auswerfen der Kassette bewirkt. Die mittels Schleifkontakte, Hallelemente oder Lichtschranken arbeitenden Impulsgeber können direkt an den Wickeltellern angebracht sein oder an einem den Wickelteller antreibenden Getriebeteil. Bei einem aus der DE 31 26 407 A1 bekannten Laufwerk für ein Kassettentonbandgerät dient eine mit dem Antrieb des die Aufwickelfunktion ausführenden Wickeltellers in Verbindung stehende, mit optischen Reflektoren versehene Scheibe in Verbindung mit einem Photoelement als Impulsgeber.

Mit den bekannten Anordnungen zur Überwachung des Bandtransportes wird lediglich erkannt, wenn der die Aufwickelfunktion ausführende Wickelteller stehenbleibt. Nicht erkannt wird, wenn die Capstanwelle das Magnetband aufwickelt, da in diesem Fall vom Impulsgeber weiterhin Impulse abgegeben werden, obwohl beide Wickelteller jetzt das Magnetband abwickeln und zueinander unterschiedliche Drehrichtungen haben.

Der Erfindung liegt die Aufgabe zugrunde, eine Anordnung zur Überwachung des Bandtransportes eines Kassettentonbandgerätes so zu verbessern, daß sie anspricht, wenn die Capstanwelle das Magnetband infolge einer Störung aufwickelt.

Diese Aufgabe wird bei einer gattungsgemäßen Anordnung durch die kennzeichnenden Merkmale des Anspruchs 1 gelöst.

Die mit der Erfindung erzielten Vorteile bestehen insbesondere darin, daß die die tatsächliche Drehrichtung des Wickeltellers erkennende Anordnung ein Aufwickeln des Tonbandes auf der Capstanwelle schnell erkennt, so daß bis zum Abschalten des Gerätes nur eine geringe Menge Tonband von der Capstanwelle aufgewickelt werden kann. Hierdurch wird eine Beschädigung der Mechanik ausgeschlossen. Zudem kann der geringe aufgewickelte Teil des Tonbandes problemlos von der Capstanwelle entfernt werden.

Durch die in den Unteransprüchen aufgeführten Maßnahmen sind vorteilhafte Ausgestaltungen der im Anspruch 1 angegebenen Anordnung möglich.

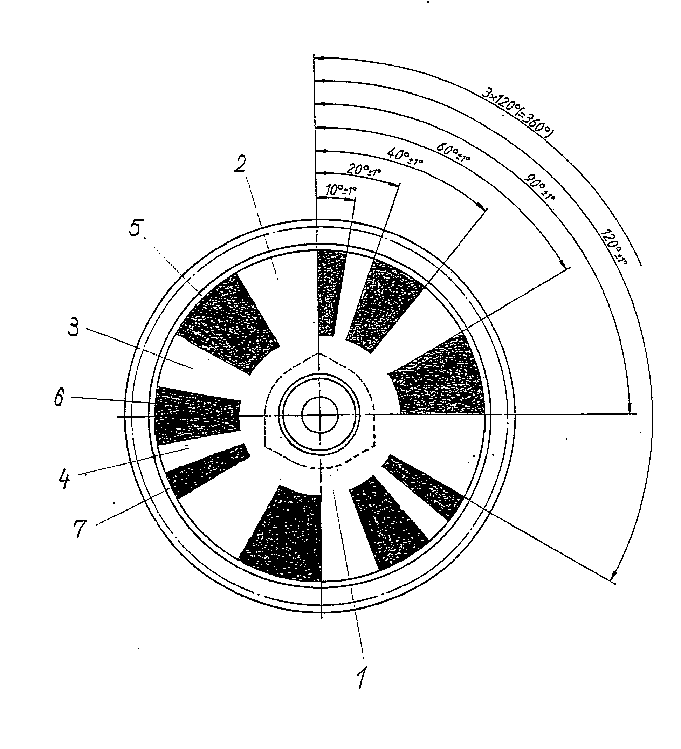

Ein Ausführungsbeispiel einer Anordnung zur optoelektronischen Überwachung des Bandtransportes in einem Kassettentonbandgerät wird im folgenden näher beschrieben. Ein Ausführungsbeispiel der Aufteilung eines Hell-Dunkel-Sektoren aufweisenden Wickeltellers ist im Prinzip in der Zeichnung dargestellt.

Auf der Unterseite des die Aufwickelfunktion ausführenden Wickeltellers 1 eines Kassettentonbandgerätes sind, wie in der Zeichnung angegeben, in wechselnder Folge reflektierende helle Sektoren 2, 3, 4 und nichtreflektierende dunkle Sektoren 5, 6, 7 unterschiedlicher Breite angeordnet. Auf dreimal 120° verteilt liegen zyklisch hintereinander je zwei Hell- und Dunkel-Sektoren 2,5; 3,6; 4,7 zu je 30°, 20° und 10°. Diese Hell-Dunkel-Sektoren werden in bekannter Weise von einer unter dem Wickelteller angeordneten, Licht aussendenden und reflektiertes Licht empfangenden Lichtschranke abgetastet. Die bei einem drehenden Wickelteller von der Lichtschranke gelieferten Impulse, die den Hell-Dunkel-Sektoren je nach Drehrichtung in aufsteigender oder absteigender Reihenfolge entsprechen, werden einem Mikroprozessor zugeführt, der so programmiert ist, daß er die Drehrichtung erkennt. Tritt nun während des Betriebes der Störfall ein, bei dem die Capstanwelle das Magnetband aufwickelt, so wird das Magnetband von beiden Spulenkörpern der Kassette abgewickelt. Dadurch dreht der für die Aufwickelfunktion vorgesehene Wickelteller in Gegenrichtung. Der Mikroprozessor erkennt dieses an der Form und der Folge der Impulse und gibt ein Schaltsignal an die Steuereinrichtung, die in bekannter Weise den Antrieb des Tonbandgerätes abschaltet und einen Kassettenauswurf auslöst. Dieses erfolgt relativ schnell. Im ungünstigsten Fall, d. h. bei vollem Bandwickel, beträgt die Drehzahl eines Wickeltellers 0,31 Hz. Nach einer Drittelumdrehung (120°) sind 1,08 sec. verstrichen und der Fehler ist erkannt. Wird nun ein Kassettenauswurf durchgeführt, ist es noch möglich, die Kassette aus dem Gerät zu entfernen, da nur eine geringe Menge Magnetband von der Capstanwelle aufgewickelt werden konnte. Eine Beschädigung des Gerätes kann somit nicht erfolgen. Der von der Capstanwelle aufgewickelte Teil des Magnetbandes läßt sich relativ einfach entfernen ohne das das Gerät geöffnet oder ausgebaut werden braucht.

## Ansprüche

1. Anordnung zur optoelektronischen Überwachung des Bandtransportes in einem Kassettentonbandgerät, bei dem der die Aufwickelfunktion ausführende Wickelteller mit einer in zyklischer Folge Hell-Dunkel-Sektoren aufweisenden Scheibe verbunden ist, die zusammen mit einer Lichtschranke einen Impulsgeber bildet, der bei drehendem Wickelteller elektrische Impulse an die Steuereinrichtung des Gerätes abgibt,
dadurch gekennzeichnet,
daß die aufeinanderfolgenden Hell-Dunkel-Sektoren (2, 3, 4; 5, 6, 7) derart ausgebildet und angeordnet sind, daß eine in der Steueranordnung vorgesehene elektronische Auswerteschaltung die Drehrichtung des Wickeltellers 1 erkennt und bei einer zur Soll-Drehrichtung gegenläufigen Drehrichtung des die Aufwickelfunktion ausführenden Wickeltellers 1 das Kassettentonbandgerät in an sich bekannter Weise außer Betrieb setzt.

2. Anordnung nach Anspruch 1,
dadurch gekennzeichnet,
daß als elektrische Schaltungsanordnung zur Erkennung der Drehrichtung des Wickeltellers 1 ein Mikroprozessor vorgesehen ist.

3. Anordnung nach Anspruch 1,
dadurch gekennzeichnet,
daß die Hell-Dunkel-Sektoren (2, 3, 4; 5, 6, 7) unterschiedliche Breiten in aufsteigender oder absteigender Reihenfolge aufweisen.

4. Anordnung nach Anspruch 3,
dadurch gekennzeichnet,
daß mehrere Hell-Dunkel-Sektoren (2, 3, 4; 5, 6, 7) mit sich in einer Richtung ändernden Breiten in zyklisch nacheinander angeordneten Gruppen zusammengefaßt sind.

5. Schaltungsanordnung nach einem der Ansprüche 1 bis 4,
dadurch gekennzeichnet,
daß die Hell-Dunkel-Sektoren (2, 3, 4; 5, 6, 7) auf dem Wikkelteller 1 angebracht sind.

6. Anordnung nach Anspruch 4,
dadurch gekennzeichnet,
daß jede der Gruppen mindestens drei Hell-Dunkel-Sektoren (2, 3, 4; 5, 6, 7) umfaßt.